# DEMANDE DE BREVET EUROPEEN

(11) **EP 2 086 071 A1**
(43) Date de publication de la demande: **05.08.2009**
(21) Numéro de dépôt: 09151397.8
(22) Date de dépôt: 27.01.2009
(51) Int. Cl.: H01S 3/067, G02B 6/02, H01S 3/0933, C03B 37/012

(54) **Guide optique dopé par des ions terres rares et dispositif optique le comprenant**

(30) Priorité: 01.02.2008 FR 0850650
(71) Demandeur: Alcatel Lucent, 75008 Paris (FR)
(72) Inventeur: Burov, Ekaterina, 92100, BOULOGNE-BILLANCOURT (FR); Pastouret, Alain, 91300, MASSY (FR); Simonneau, Christian, 91620, NOZAY (FR); Gasca, Laurent, 91140, VILLEBON-SUR-YVETTE (FR); Collet, Christine, 91540, MENNECY (FR)
(74) Mandataire: Sciaux, Edmond

(57) **Abrégé**

L'invention se rapporte à un guide d'onde optique, en particulier une fibre optique comprenant un coeur, formé d'un matériau à base de silice dopé avec des ions de terres rares, recouvert d'une gaine optique. Des nanoparticules, dont au moins une partie est en métal, sont dispersées dans le matériau, du coeur.

Des dispositifs optiques, tels que notamment des amplificateurs optiques, comportent une fibre optique comprenant unit coeur formé d'un matériau à base de silice dopé avec des ions de terres rares recouvert d'une gaine optique, des nanoparticules, dont au moins une partie est en métal, étant dispersée dans le matériau du coeur, et une source de pompage délivrant un rayonnement électromagnétique d'excitation se propageant dans le coeur.

## Description

La présente invention se rapporte à un guide optique dopé par des ions terres rares, du type de ceux utilisés dans les dispositifs optiques tels que des amplificateurs optiques. Elle s'étend en outre aux dispositifs optiques comprenant un tel guide, et au procédé de fabrication de ce guide.

L'amplification optique repose sur le phénomène de l'émission stimulée : le signal est amplifié dans un guide d'onde grâce à un apport extérieur d'énergie appelé pompage. Certains amplificateurs optiques comprennent un guide optique dopé avec des ions de terres rares (familles des lanthanides comme Pr, Tb, Yb ou Er) constituant le milieu amplificateur, associé à une source de pompage optique et à un multiplexeur permettant de coupler le flux lumineux provenait de la source de pompage au signal à l'intérieur du guide d'onde.
Des amplificateurs, comprenant notamment une fibre optique dopée à l'erbium Er³⁺ (EDF pour « Erbium Doped Fiber en anglais), sont actuellement utilisés dans tous les systèmes de transport optique pour l'amplification localisée d'un signal optique. Ils représentent la meilleure solution actuelle pour amplifier un signal multiplexé. Pour obtenir de bonnes performances, une des contraintes à respecter dans la conception de ces amplificateurs est que les longueurs d'onde de pompage soient strictement limitées à une longueurs d'onde bien définie, à savoir 978 nm ± 5 nm ou 1480 nm ± 5 nm. Par conséquent, le choix de la source de pompage est limité à une technologie spécifique et très coûteuse, à savoir les diodes laser de pompe de forte puissance à semi-conducteurs. En outre, dans certaines applications où une très forte puissance n'est pas nécessaire (un amplificateur EDFA à une seule longueur d'onde placé avant le récepteur auquel il est associé, par exemple), il peut être extrêmement utile d'être capable d'envoyer un signal de pompe en utilisant une source à très faible coût, tels qu'une diode électroluminescente (LED pour « Light Emitting Diode » en anglais) par exemple, ce qui n'est pas possible avec les guide optiques dopés connus
De nos jours, dans les amplificateurs courants à fibre optique dopée à l'erbium (EDFA), on n'utilise pas de solution qui permettrait d'envoyer un signal de pompe ayant une longueur d'onde différente des valeurs mentionnées précédemment 980 nm ou 1480 nm.

Un moyen connu pour réussir à utiliser une longueur d'onde différente est d'utiliser le transfert d'énergie via un co-dopant ayant une grande section d'absorption et capable de transférer son énergie de manière non-radiative à l'erbium (transfert ytterbium/erbium ou transfert semi-conducteur/erbium). Le faisceau de pompe est absorbé par le co-dopant (ion donneur) qui est excité à un niveau d'énergie supérieur, l'énergie est alors transférée à l'erbium (ion récepteur) qui engendre la transition.
Cette méthode permet le découplage entre l'absorption et l'émission, rendant possible l'élargissement du choix de la langueur d'onde de pompe et la modification de la section efficace d'absorption.
Cependant cette méthode présente plusieurs inconvénients. D'une part, dans le cas d'un transfert d'énergie utilisant le couple ytterbium/erbium, l'amplification sur la totalité de la bande C (1529 nm à 1565 nm) n'est pas possible car l'amplification de la bande commence à 1535nm, et de plus cela ne conduit pas à un réel changement de la longueur d'onde de pompage car la variation est seulement possible dans la gamme 915 - 1000 nm. D'autre part, le transfert semi-conducteurs/erbium souffre de la difficulté à garder les atomes semi-conducteurs dans leur état réduit. En outre dans tous les cas le transfert est limité au co-dopant placé au voisinage de l'erbium.

La présente invention a pour but de proposer une solution qui permette d'adapter la longueur d'onde de pompage afin de pouvoir envoyer un signal de pompe à la longueur d'onde désirée dans un dispositif comprenant un guide d'onde dopé aux terres rares.
L'invention a aussi pour but de permettre un pompage à des longueurs d'onde différentes de celles habituellement utilisées: 978 nm ± 15 nm ou autour de 1480 nm (1450 nm à 1510 nm).
L'invention a encore pour but de permettre l'utilisation de sources de pompage variées et de faible coût.

L'objet de la présente invention est un guide d'onde optique, en particulier une fibre optique comprenant un coeur, formé d'un matériau à base de silice dopé avec des ions de terres rares, une gaine optique recouvrant le coeur, des nanoparticules, au moins partiellement en métal, étant dispersées dans le matériau du coeur.

Selon une forme d'exécution particulière de l'invention, la taille des nanoparticules est sensiblement plus petite que la longueur d'onde du rayonnement électromagnétique d'excitation, c'est à dire du signal de pompe. Avantageusement les nanoparticules ont une taille inférieure ou égale à 20 nm.

Une fibre optique, utilisée pour constituer un amplificateur ou un laser, comporte classiquement un milieu amplificateur comprenant :
- un coeur fait d'une matrice en matériau transparent dans laquelle sont introduit des élément dopants actifs qui sont le siège du phénomène d'amplification, tels que des ions de terres rares comme l'erbium par exemple, et
- une gaine optique pour le guidage de la puissance lumineuse qui est majoritairement transmise par le coeur.

La fibre optique selon l'invention permet d'exploiter le phénomène de résonnance plasmonique de surface (SPR pour « Surface Plasmonic Resonance » en anglais) qui est généré au voisinage des nanoparticules contenant du métal sous l'effet de ronde de pompe. Ce phénomène résulte de l'interaction résonnante entre un rayonnement électromagnétique et les électrons libres situés à l'interface entre le métal, et la matrice diélectrique, qui génère une onde de densité d'électrons appelées plasrnean de surface localisé (LSP pour « Localized Surface Plasmon » en anglais).

On optimise l'émission stimulée de l'erbium par l'adaptation des conditions de compatibilité de l'onde SPR avec la bande d'absorption de l'erbium. L'intensité, la longueur d'onde et la distance d'amortissement de la résonnance plasmonique de surface (SPR) sont fortement dépendantes de la nature des nanoparticules, de leur taille et de leur forme, ainsi que de la composition de la matrice diélectrique dans laquelle elles sont dispersées. La matrice diélectrique peut être notamment à base de silice, d'un polymère et/ou contenir principalement du bismuth, du fluor ou de l'aluminium. Elle peut en outre contenir éventuellement un ou plusieurs dopants.

Étant donné que, dans ce cas, le mécanisme de transfert d'énergie est différent des transferts directs Yb/Er ou semi-conducteur/Er, l'efficacité du couplage ne nécessite pas que les nanoparticules soient disposés au voisinage immédiat de l'erbium comme dans l'art antérieur. Les nanoparticules peuvent produire leur effet jusqu'à une distance de 10 à 15 nm de l'ion erbium.

Selon l'invention, les nanoparticules et les ions terres rares sont répartis dans la même zone, c'est-à-dire dans le coeur. Eventuellement, des nanoparticules pourraient se trouver dans une zone très mince adjacente au coeur à condition que son épaisseur soit inférieure ou égale à 15 µm.

Les métaux capables de générer une SPR compatible avec les bandes télécoms et les contraintes liées à la fabrication du guide optique, sont choisi à partir des principaux critères suivants:
- la température de fusion du métal doit être plus élevée que celui appliqué lors de la fabrication du guide,
- une forte densité d'électrons est importante pour l'efficacité de la SPR
- le métal doit avoir une bonne résistance vis à vis de l'oxydation,
- les propriétés optiques drivent être compatibles avec les conditions de propagation dans le guide (diffusion de pertes, l'indice de réfraction, etc).

Selon une forme d'exécution de invention, les nanoparticules contiennent au moins un métal choisi parmi l'or (Au), l'argent (Ag), le rhodium (Rh), l'iridium (Ir), le ruthénium (Ru), le molybdène (Mo), et l'osmium (Os). Cette liste n'est pas exhaustive. La présence de plasmons à la surface de ces métaux peut être détectée par analyse spectrale optique.

Les nanoparticules peuvent être recouvertes d'une couche de matériau diélectrique qui facilite leur dispersion et les protège contre l'oxydation. Avantageusement cette couche peut posséder une constante diélectrique élevée modifiant les caractéristiques de la résonnance plasmonique de surface (SPR).

Selon un premier mode de réalisation de l'invention, les nanoparticules sont en métal.

Selon un deuxième mode de réalisation de l'invention, les nanoparticules sont formées d'un noyau en métal dont la surface est au moins partiellement recouverte d'une couche contenant des ions de terres rares.

Selon un troisième mode de réalisation de l'invention, les nanoparticules sont formées d'un noyau contenant des ions de terres rares dont la surface est au moins partiellement recouverte d'une couche de métal.

La présente invention a aussi pour objet un dispositif optique comportant une fibre optique comprenant un coeur formé d'un matériau à base de silice dopé avec des ions de terres rares recouvert d'une gaine optique, des nanoparticules, au moins partiellement en métal, étant dispersées dans le matériau du coeur, et une source de pompage délivrant un rayonnement électromagnétique d'excitation se propageant dans le coeur.

La présente invention a encore pour objet un amplificateur optique comportant une fibre optique comprenant un coeur formé d'un matériau à base de silice dopé avec des ions de terres rares recouverte d'une gaine optique, des nanoparticules, au moins partiellement en métal, étant dispersées dans le matériau du coeur, et une source de pompage délivrant un rayonnement électromagnétique d'excitation se propageant dans le coeur.
L'invention a comme avantage d'autoriser la réalisation d'amplificateurs EDFA à moindre coût grâce à la possibilité d'utiliser une longueur d'onde de pompage différente. L'invention a aussi comme avantage la polyvalente de la fibre optique permettant d'exploiter ce phénomène, ouvrant ainsi la voie à de nombreuses applications.

Selon un mode de fabrication particulier, des nanoparticules dont au moins une partie est en métal sont mises en suspension dans une solution contenant des ions de terres rares.
La présente invention a aussi pour objet un procédé de fabrication d'une fibre optique comprenant les étapes suivantes:
- on met en solution des ions de terres rares,
- on met en suspension dans la solution des nanoparticules dont au moins une partie est en métal,
- on incorpore les nanoparticules dans le matériau du coeur d'une préforme, ou dans son voisinage immédiat,
- on réalise un guide d'onde à partir de la préforme.

L'invention présente un intérêt réel pour tous les concurrents ayant besoin de la disponibilité de composants moins coûteux et de réseaux optiques, notamment pour des applications en télécommunications. La solution proposée peut aussi trouver des applications dans d'autres domaines que les télécommunications, telles que les lasers à fibres en vue d'applications industrielles et médicales.

D'autres caractéristiques et avantages de la présente invention apparaîtront à la lecture de la description qui suit d'un mode de réalisation, donné bien entendu à titre illustratif et non limitatif, et dans le dessin annexé sur lequel:
- la figure 1 est un schéma illustrant le phénomène de résonnance plasmonique de surface (SPR),
- les figures 2a et 2b illustre les transitions de l'ion erbium se produisant en l'absence et en présence du phénomène de résonnance plasmonique de surface (SPR),
- la figure 3 montre schématiquement un dispositif optique selon une forme d'exécution de j'invention.
- la figure 4 montre schématiquement un guide d'onde optique selon une forme d'exécution de l'invention.
- la figure 5 représente un premier mode de réalisation de l'invention,
- la figure 6 représente un deuxième mode de réalisation de l'invention,
- la figure 7 représente un troisième mode de réalisation de l'invention,

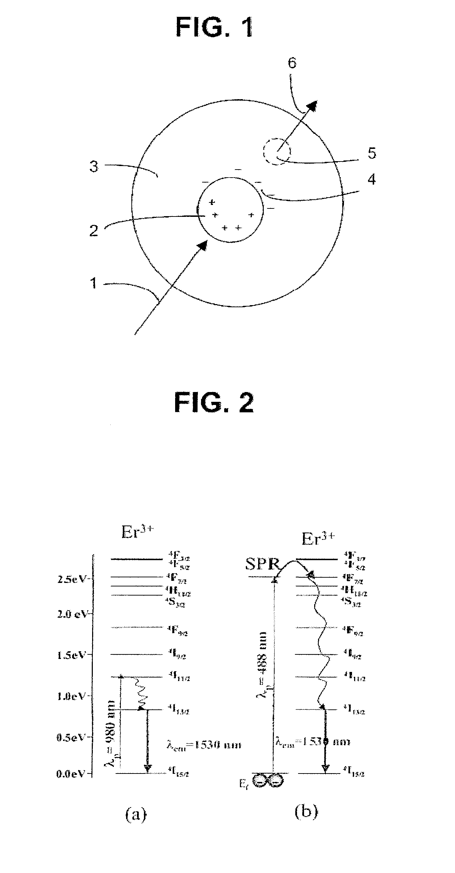

La figure 1 montre une onde électromagnétique **1** d'excitation émise par le laser de pompe. L'onde **1** induit un effet de résonnance plasmonique à la surface d'une nanoparticule **2** au moins partiellement en métal, contenue dans le matériau **3** du coeur de la fibre optique, qui provoque l'oscillation du nuage électronique de surface **4.** L'ion erbium **5** placé au voisinage de la nanoparticule métallique **2** est excité, et émet un photon **6** en se désexcitant.

La figure 2a montre les niveaux d'énergie des ions erbiums incorporés dans une matrice majoritairement en silice. Le niveau ⁴I_{15/2} représente le niveau fondamentaL Le niveau ⁴I_{13/2} est subdivisé en sous-niveaux (non représentés sur la figure) et correspond à une zone d'émission/absorption de la lumière entre 1450 nm et 1620 nm. On utilise les diodes de pompe conventionnelles émettant autour de 1480 nm pour exciter les ions erbium.
Le niveau ⁴I_{11/2} correspond à une zone d'absorption autour de 978 nm. Contrairement au niveau ⁴I_{13/2} c'est un niveau quasiment non radiatif. On utilise les diodes de pompe conventionnelles émettant autour de 978 nm. pour exciter les ions erbium.
Pour une amplification autour de 1550 nm, les autres niveaux d'énergie représentés possèdent un très faible efficacité. Par exemple le niveau ⁴F_{7/2} permet une très faible absorption à la longueur d'onde de 488 nm.

La figure 2b montre ces mêmes niveaux d'énergie des ions erbium, ainsi qu'un exemple de niveaux d'énergie d'un plasmon de surface résonnant (SPR) d'une nanoparticule métallique. Cette nanoparticule présente une forte absorption autour de 488 nm. La proximité de cette nanoparticule métallique avec un ion erbium permettra le transfert à l'ion erbium de l'énergie absorbé par la nanoparticule métallique. Contrairement aux co-dopants traditionnels, comme l'ytterbium, où la proximité entre l'ion Er³⁺ et le co-dopant doit être inférieure à 2 nm ; dans le cas présent d'une nanoparticule dont au moins une partie est en métal cette proximité peut s'étendre jusqu'à 10nm.

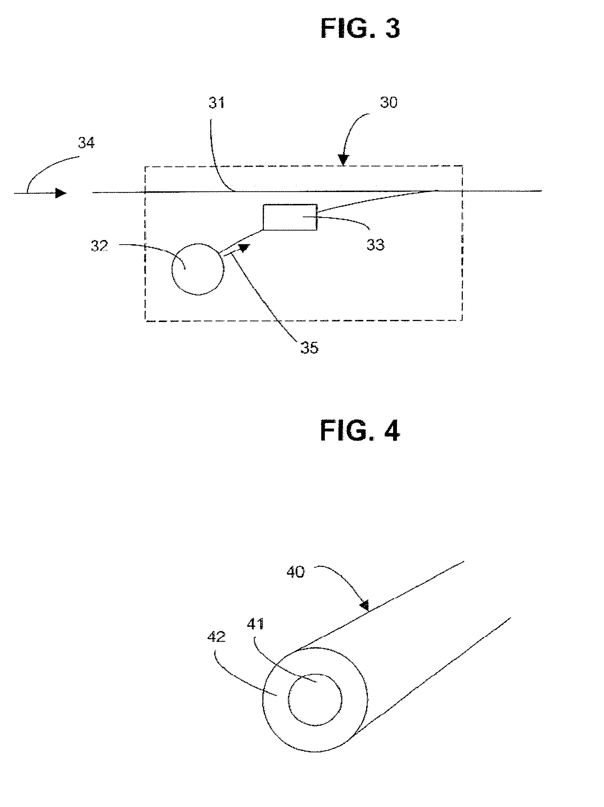

Un dispositif optique selon une mode de réalisation de l'invention est représenté sur la figure 3. Le dispositif **30** est ici un amplificateur optique. Il comprend un guide d'onde tel qu'une fibre optique **31** et une source de pompage **32** qui peut être une diode électroluminescente (LED) par exemple. De manière habituelle un multiplexeur **33** est associé à la source de pompage **32.** Un signal incident **34** parcours la fibre optique **31** et se trouve amplifié au moyen de l'onde de pompe **33** envoyée par la source **32** dans la fibre optique **31.**

Le guide d'onde représenté sur la figure 4 est une fibre optique **40** comportant au moins un coeur **41** entouré coaxialement d'une gaine optique **42.** Le coeur et la gaine sont habituellement constitués d'un matériau en verre à base de silice. L'extérieur de la fibre optique est habituellement en outre recouvert d'un revêtement protecteur en polymère. Une méthode classique pour doper une fibre optique est l'imprégnation du matériau poreux du coeur par une solution aqueuse ou alcoolique contenant les dopants Dans le cas d'une fibre optique dopée aux ions de terres rares, le matériau du coeur peut être en alumino-silicate dopé à l'erbium par exemple.

Les exemples suivants illustrent quelques-uns des modes de réalisation de la solution selon l'invention. La réalisation de la fibre optique utilise notamment un procédé de dépôt chimique en phase vapeur (MCVD pour « Modified Chemical Vapor Deposition » en anglais).

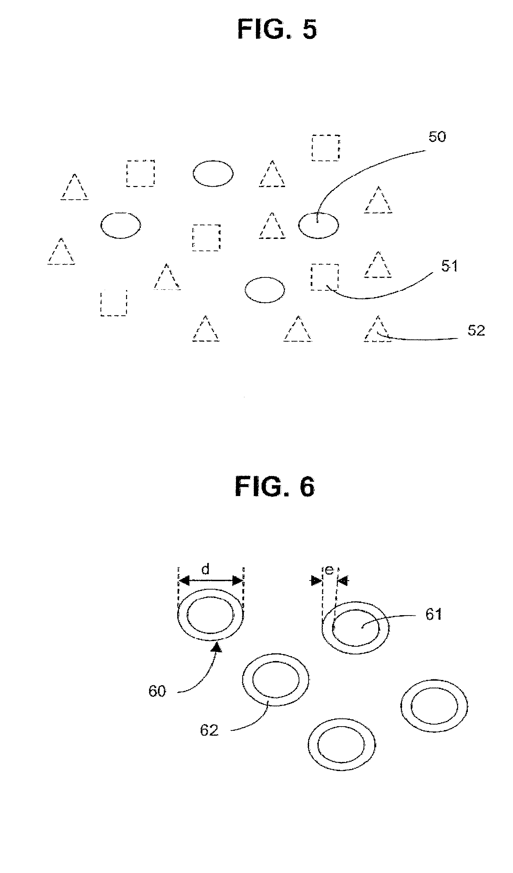

La figure 5 montre le cas où on ajoute dans la fibre optique des nanoparticules métalliques qui ont une résonance plasmonique dans le visible autour de 488nm, la bande d'absorption de l'erbium. La position de la longueur d'onde de SPR peut être modifiée en faisant varier la taille des nanoparticules par modification des paramètres de fabrication.
Dans l'exemple présent, des nanoparticules de métal **50** sont incorporées dans le matériau **51** en verre à base de silice du coeur d'une fibre optique. Les nanoparticules de métal sont obtenues en dispersion aqueuse par des méthodes physiques ou faisant appel à la chimie douce. Les ions erbium **52** et aluminium **53** sont mélangées par la dissolution simultanée dans l'eau des chlorures ErCl₃ et AlCl₃. Les nanoparticules **50** sont alors ajoutées dans la solution contenant les ions terres rares. Tous les additifs (Er, Al, nanoparticules) sont alors incorporés en même temps dans le matériau du coeur afin de former une préforme optique dopée qui est finalement fibrée pour donner une fibre optique.
L'addition de ces nanoparticules permit d'augmenter de plus de 10 fois par rapport à un pompage de l'ion Er³⁺ l'efficacité de pompage à 488 nm en utilisant par exemple une diode électroluminescente (LED), et donc autorise l'utilisation de pompes optiques à faible coût.

Dans le mode de réalisation de la figure 6, la fibre optique est dopée par des nanoparticules **60** composées d'un noyau contenant des ions terres rares **61,** par exemple un noyau en verre à base de silice contenant des ions Er/Al, dont la surface est au moins partiellement recouvertes d'une couche en métal **62.** Dans ce cas, la longueur d'onde de la SPR peut être adaptée au pompage en faisant varier l'épaisseur e de la couche métallique et le diamètre d du noyau. Il y a un fort couplage électromagnétique entre l'intérieur et extérieur des parois d'interface **63** de la couche métallique lorsque le diamètre d est très inférieur à l'épaisseur e.
Pour un diamètre extérieur d donné, la longueur d'onde du pic d'excitation du plasmon se déplace de manière importante des longueurs d'onde visibles vers les longueurs d'onde infrarouges avec la diminution d'épaisseur e de la couche de métal **62.** On choisira donc de préférence une épaisseur suffisante comprise entre 2 nm et 15 nm.
Des noyaux contenant des ions terres rares **61** tels que Er/A sont synthétisés par voie physique ou de chimie douce, ce qui permet d'obtenir une poudre de taille manométrique. La poudre est ensuite enduite d'une couche de métal par voie physique ou de chimie douce. La couche métallique **62** peut couvrir toute la surface des noyaux **61** ou être limitée à certaines zones de la surface. Les nanoparticules 60 obtenues sont mises en suspension aqueuse ou alcoolique, et incorporées dans le matériau du coeur d'une préforme par imprégnation. La fibre optique est ensuite obtenue par fibrage de la préforme.

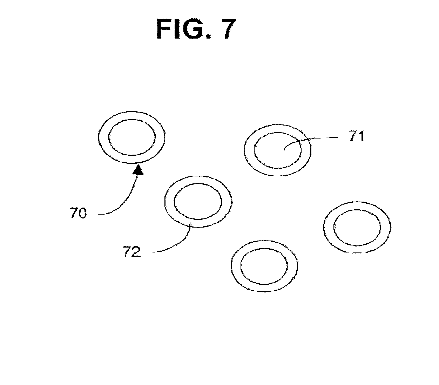

La figure 7 montre le cas où la fibre optique est dopée par des nanoparticules **70** composées de noyaux de métal **71** qui sont au moins partiellement recouverts d'une couche contenant des ions terres rares **72,** comme Er/Al. Dans ce cas, l'introduction de l'ion erbium dans le revêtement de la nanoparticule **70** permet de contrôler la distance entre la surface du métal et l'ion Er³⁺, rendant possible l'optimisation des conditions du transfert d'énergie sous l'effet du pompage, et l'accroissement de la valseur d'émission de l'erbium,

Les noyaux de métal **71** sont synthétisés par une méthode physique ou de chimie douce menant à une poudre de taille nanométrique. La poudre est ensuite enduite d'une couche contenant des ions Er/Al **72** par voie physique ou de chimie douce. La couche **72** peut couvrir toute la surface des noyaux métallique **71** ou être limitée à certaines zones de la surface. Les nanoparticules 70 sont mises en suspension aqueuse ou alcoolique, et incorporées dans le matériau du coeur d'une préforme par imprégnation. La fibre optique est ensuite obtenue par fibrage de la préforme.

## Revendications

1. Fibre optique comprenant
- un coeur (41), formé d'un matériau (3) à base de silice dopé avec des ions de terres rares,
- une gaine optique (42) recouvrant le coeur (41), des nanoparticules (2), au moins partiellement en métal, sont dispersées dans le matériau (3) du coeur.

2. Fibre optique selon la revendication 1, dans laquelle la taille des nanoparticules est plus petite que la longueur d'onde du rayonnement électromagnétique d'excitation.

3. Fibre otique selon la revendication 2, dans laquelle les nanoparticules ont une taille inférieure ou égale à 20 nm

4. Fibre optique selon l'une des revendications 1 à 3, dans laquelle les nanoparticules contiennent au moins un métal, choisi parmi l'or, l'argent, le rhodium, l'iridium, le ruthénium, le molybdène et l'osmium.

5. Fibre optique selon l'une des revendications 1 à 4, dans laquelle les nanoparticules sont en métal.

6. Fibre optique selon l'une des revendications 1 à 4, dans laquelle les nanoparticules sont formées d'un noyau en métal dont la surface est au moins partiellement recouverte d'une couche contenant des ions de terres rares.

7. Fibre optique selon l'une des revendications 1 à 4, dans laquelle les nanoparticules sont formées d'un noyau contenant des ions de terres rares dont la surface est au moins partiellement recouverte d'une couche de métal.

8. Fibre optique selon l'une des revendications 1 à 7, dans laquelle les nanoparticutes sont recouvertes d'une couche de matériau diélectrique.

9. Dispositif optique comportant une fibre optique (31) comprenant un coeur formé d'un matériau à base de silice dopé avec des ions de terres rares recouvert d'une gaine optique, des nanoparticules au moins partiellement en métal, étant dispersée dans le matériau du coeur, et une source de pompage (32) délivrant un rayonnement électromagnétique d'excitation se propageant dans le coeur.

10. Amplificateur optique comportant une fibre optique (31) comprenant un coeur formé d'un matériau à base de silice dopé avec des ions de terres rares recouvert d'une gaine optique, des nanoparticules au moins partiellement en métal, étant dispersée dans le matériau du coeur, et une source de pompage (32) délivrant un rayonnement électromagnétique d'excitation se propageant dans le coeur.

11. Procédé de fabrication d'une fibre optique, comprenant un coeur formé d'un matériau à base de silice dopé avec des ions de terres rares recouvert d'une gaine optique, des nanoparticules au moins partiellement en métal, étant dispersée dans le matériau du coeur, le procédé comprenant :
- on met en solution des ions de terres rares,
- on met en suspension dans la solution des nanoparticules dont au moins une partie est en métal,
- on incorpore les nanoparticules dans le matériau du coeur d'une préforme, et
- on réalise un guide d'onde à partir de la préforme.
